# EUROPÄISCHE PATENTSCHRIFT

(11) **EP 4 058 714 B1**
(45) Veröffentlichungstag und Bekanntmachung des Hinweises auf die Patenterteilung: **03.01.2024**
(21) Anmeldenummer: 20808018.4
(22) Anmeldetag: 12.11.2020
(51) Int. Cl.: F16L 58/18, F16L 59/18, F28F 9/02, F28D 9/00, F28F 21/08

(54) **ÜBERGANGSBAUTEIL MIT ISOLIERUNG**
TRANSITION COMPONENT WITH INSULATION
COMPOSANT DE RACCORDEMENT À ISOLATION

(30) Priorität: 15.11.2019 EP 19020641
(43) Veröffentlichungstag der Anmeldung: 21.09.2022
(73) Patentinhaber: Linde GmbH, 82049 Pullach (DE)
(72) Erfinder: HÖLZL, Reinhold, 82538 Geretsried (DE); SCHÖNBERGER, Manfred, 83342 Tacherting (DE); ENGLERT, Thomas, 82205 Gilching (DE)
(74) Vertreter: Meilinger, Claudia Sabine
(86) Internationale Anmeldenummer: PCT/EP2020/025508
(87) Internationale Veröffentlichungsnummer: WO 2021/093993

(56) Entgegenhaltungen:
- WO-A1-2015/042721
- FR-A1- 2 750 483
- FR-A1- 2 947 032
- US-A- 3 747 961
- US-A- 3 899 007

## Beschreibung

Die Erfindung betrifft ein Übergangsbauteil zur Verbindung von Bauteilen eines chemischen oder verfahrenstechnischen Apparats, wobei das Übergangsbauteil ein erstes Materialstück aus einem ersten Material und ein zweites Materialstück aus einem zweiten Material aufweist, wobei das erste Material und das zweite Material nicht durch Schmelzschweißen miteinander verbindbar sind, wobei das erste Materialstück und das zweite Materialstück einen Hohlkörper bilden, wobei das Übergangsbauteil eine radial innenliegende Innenseite und eine radial außenliegende Außenseite aufweist, und wobei das erste Materialstück über mindestens eine Zwischenmaterialschicht mit dem zweiten Materialstück verbunden ist. Die Erfindung betrifft ferner einen Core-in-Shell-Wärmetauscher mit dem Übergangsbauteil sowie eine Coldbox mit einer Verrohrung mit dem Übergangsbauteil.

### Stand der Technik

In zahlreichen Anwendungen, insbesondere kryogenen Anlagen, beispielsweise kryogenen Wärmetauschern zur Verflüssigung von Gasen oder einer Coldbox zur Bereitstellung bspw. eines verflüssigten kryogenen Gases, oder bei Core-in-Shell-Wärmetauschern oder kryogenen Behältern oder Kryopumpen ist es notwendig, z.B. zur Bereitstellung von Fluiddichtigkeit Bauteile, wie etwa Rohre, insbesondere aus unterschiedlichen Werkstoffen, miteinander zu verbinden, insbesondere zu verschweißen. Die genannten Anlagen bzw. Vorrichtungen sind Beispiele für oder Bestandteile von den oben genannten chemischen oder verfahrenstechnischen Apparaten.

Beispielsweise wird zur Verbindung eines Aluminiumrohres mit einem Stahlrohr ein Übergangsbauteil (engl. Transition Joint) verwendet, welches einen Aluminiumabschnitt, an dem das Aluminiumrohr befestigt, insbesondere verschweißt, werden kann, und einen Stahlabschnitt, an dem das Stahlrohr befestigt, insbesondere verschweißt, werden kann, aufweist. Um den Aluminiumabschnitt des Übergangsbauteils mit dem Stahlabschnitt des Übergangsbauteils fluiddicht zu verbinden, werden beispielsweise verschiedene Zwischenmaterialschichten aus Metall, beispielsweise aus Titan oder aus einer Titanlegierung, aus Kupfer, aus Nickel oder aus einer Kupfer-Nickel-Legierung, in mehreren Schritten mittels Sprengplattieren zwischen dem Aluminiumabschnitt und dem Stahlabschnitt angeordnet. Dieses Herstellungsverfahren ist einerseits sehr aufwendig. Andererseits werden die Zwischenmaterialschichten aus Metall durch das Sprengplattieren physisch sehr beansprucht, wodurch die Zwischenmaterialschichten spröde oder brüchig werden können.

Auch andere Arten von Verbindungsstücken bzw. -konstruktionen sind aus dem Stand der Technik bekannt:
Die US 3 899 007 A und die US 3 747 961 A beschreiben jeweils eine Rohranordnung mit einem innenliegenden, hochtemperaturbeständigen Zentralrohr, das zum Schutz vor axialen oder longitudinalen Bewegungen von einem Anker bzw. einer Ankerplatte in einem koaxialen Gehäuserohr gehalten wird. Der Anker wird aus diesem Gehäuse hinausgeführt und liegt auf der Außenseite in einer Isolierschicht, beispielsweise aus Beton. Das Zentralrohr ist seinerseits von einer isolierenden Ringschicht umgeben. Die FR 2 947 032 A1 schlägt vor, zwei Leitungen über eine Flansch- bzw. Verbindungsstruktur zu verbinden. Jede der beiden Leitungen hat eine innere Wand und eine einhüllende Wand, wobei die innere Wand am Leitungsende bis nach außen geführt ist. Auch die Verbindungsstruktur weist eine Innenseite und eine Außenseite auf, wobei bei Verbindung der beiden Leitungen die inneren Wandabschnitte an den Leitungsenden auf die Innenseite der Verbindungsstruktur zu liegen kommen.

Ziel der vorliegenden Erfindung ist es, ein Übergangsbauteil bereitzustellen, das einfacher herzustellen ist und gegenüber bekannten Übergangsbauteilen vorteilhafte Eigenschaften aufweist.

### Offenbarung der Erfindung

Erfindungsgemäß werden ein Übergangsbauteil und ein Core-in-Shell-Wärmetauscher sowie eine Coldbox mit den Merkmalen der unabhängigen Patentansprüche vorgeschlagen. Vorteilhafte Ausgestaltungen sind Gegenstand der Unteransprüche sowie der nachfolgenden Beschreibung.

Das erfindungsgemäße Übergangsbauteil zur Verbindung von Bauteilen eines chemischen oder verfahrenstechnischen Apparats, insbesondere in einer kryogenen Anlage, weist ein erstes Materialstück aus einem ersten Material und ein zweites Materialstück aus einem zweiten Material, wobei das erste Material und das zweite Material nicht durch Schmelzschweißen miteinander verbindbar sind, auf.

Das Übergangsbauteil bzw. das erste Materialstück und das zweite Materialstück weisen eine Form eines Hohlkörpers, insbesondere eine Torusform, Ringform oder Kreiszylinderform, mit einer radial innenliegenden Innenseite und einer radial außenliegenden Außenseite auf. Das Übergangsbauteil ist geeignet, mit Rohren des chemischen oder verfahrenstechnischen Apparats verbunden zu werden, wobei die Form des Übergangsbauteils bevorzugt an die Form der Rohre angepasst ist.

Das erste Materialstück ist über mindestens eine Zwischenmaterialschicht, insbesondere aus Metall, mit dem zweiten Materialstück verbunden. Die mindestens eine Zwischenmaterialschicht wird insbesondere mittels Sprengplattieren zwischen dem ersten Materialstück und dem zweiten Materialstück angeordnet bzw. auf das erste und/oder zweite Materialstück aufgebracht.

Das Übergangsbauteil aus dem Stand der Technik ist hohen thermischen Beanspruchungen ausgesetzt. Fließt beispielsweise kryogenes Fluid durch das Übergangsbauteil, wird die Innenseite des Übergangsbauteils schnell und deutlich abgekühlt, wodurch sich die Temperatur der Innenseite gegenüber der Temperatur der Außenseite des Übergangsbauteils ändert. Auf Grund dieses Temperaturunterschiedes und der unterschiedlichen Wärmeausdehnungskoeffizienten der einzelnen Materialien werden in dem Übergangsbauteil Spannungen zwischen der Innenseite und der Außenseite und/oder zwischen den einzelnen Materialien erzeugt, die beispielsweise zu Rissen oder Brüchen führen können.

Dieser Temperaturunterschied zwischen der Innenseite und der Außenseite wirkt sich beispielsweise derart auf die mindestens eine Zwischenmaterialschicht aus, dass sich die mindestens eine Zwischenmaterialschicht auf der Innenseite stärker zusammen ziehen möchte als auf der Außenseite. Somit entstehen auch in der mindestens einen Zwischenmaterialschicht Spannungen.

Diese Spannungen führen beispielsweise dazu, dass die durch das Sprengplattieren beanspruchte mindestens eine Zwischenmaterialschicht weiteren Belastungen ausgesetzt ist, wodurch sich in der Zwischenmaterialschicht Risse oder Brüche ausbilden können. Ferner können diese Risse oder Brüche beispielsweise dazu führen, dass das Übergangsbauteil undicht wird und somit kryogenes Fluid austreten könnte. Dieser Nachteil tritt bei dem erfindungsgemäß vorgeschlagenen Übergangsbauteil nicht auf.

Das erfindungsgemäße Übergangsbauteil weist mindestens eine Isolierungsschicht auf. Die Isolierungsschicht erstreckt sich zumindest zum Teil über die Innenseite und/oder die Außenseite des Übergangsbauteils.

"Zum Teil" bedeutet hier beispielsweise, dass die Isolierungsschicht nur über der mindestens einen Zwischenmaterialschicht angeordnet ist. Ferner kann die Isolierungsschicht auch über der mindestens einen Zwischenmaterialschicht und über zumindest einem Teil des ersten Materialstücks und/oder über zumindest einem Teil des zweiten Materialstücks angeordnet sein.

Ist die mindestens eine Isolierungsschicht an der Innenseite des Übergangsbauteils angeordnet, so isoliert sie das Übergangsbauteil zumindest zum Teil gegen das kryogene Fluid. Der Temperaturunterschied zwischen der Innenseite und der Außenseite des Übergangsbauteils wird dadurch reduziert. Dies führt dazu, dass im Übergangsbauteil weniger Spannungen auftreten. Ist die mindestens eine Isolierungsschicht an der Außenseite des Übergangsbauteils angeordnet, so isoliert sie das Übergangsbauteil zumindest zum Teil gegen die Temperatur der Umgebung, beispielsweise die Temperatur der Luft, wodurch der Temperaturunterschied zwischen der Innenseite und der Außenseite des Übergangsbauteils reduziert wird.

Im Allgemeinen erhöht die mindestens eine Isolierungsschicht somit die Lebensdauer des Übergangsbauteils.

Ist beispielsweise jeweils eine Isolierungsschicht an der Innenseite und der Außenseite des Übergangsbauteils angeordnet, kann der Temperaturunterschied zusätzlich reduziert und die Lebensdauer des Übergangsbauteils verlängert werden.

Bevorzugt ist die mindestens eine Isolierungsschicht derart angeordnet, dass sie das erste Materialstück, die mindestens eine Zwischenmaterialschicht und das zweite Materialstück bedeckt. Durch eine derartige Anordnung weisen das erste Materialstück, die mindestens eine Zwischenmaterialschicht und das zweite Materialstück in etwa die gleiche Temperatur auf. Auf diese Weise wird verhindert, dass beispielsweise durch einen deutlichen Temperaturunterschied zwischen dem ersten Materialstück und der mindestens einen Zwischenmaterialschicht Spannungen zwischen den beiden Bauteilen auftreten können, die beispielsweise das erste Materialstück und/oder die mindestens eine Zwischenmaterialschicht beschädigen oder zerstören können.

Bevorzugt ist die Isolierungsschicht, die an der Außenseite des Übergangsbauteils angeordnet ist, eine Ummantelung. Die Ummantelung ist als Hohlkörper ausgebildet und ist torus-, ring- oder kreiszylinderförmig. Die Isolierungsschicht in Form einer Ummantelung wird an dem Übergangsbauteil angebracht und umhüllt bzw. umschließt dieses. Die Ummantelung kann je nach Einsatzort und die jeweilige Verwendung des Übergangsbauteils angepasst und entsprechend gewählt werden.

Ist das erste Materialstück mit einer ersten Verrohrung aus dem ersten Material und das zweite Materialstück mit einer zweiten Verrohrung aus dem zweiten Material verbunden, bedeckt die Ummantelung bevorzugt einen Abschnitt der ersten Verrohrung und/oder einen Abschnitt der zweiten Verrohrung. Eine "Verrohrung" kann im hier verstandenen Sinn insbesondere einen Abschnitt einer Leitung zu bzw. von einem Wärmetauscher darstellen.

Beispielsweise ist das erste Materialstück mit der ersten Verrohrung verbunden, insbesondere verschweißt. Bedeckt die Ummantelung nur das Übergangsbauteil, wie beispielsweise bei einem Übergangsstück aus dem Stand der Technik, könnte beispielsweise ein Temperaturunterschied zwischen dem ersten Materialstück und der ersten Verrohrung dazu führen, dass Spannungen zwischen dem ersten Materialstück und der ersten Verrohrung auftreten könnten. Dies könnte beispielsweise dazu führen, dass die Schweißnaht beschädigt werden könnte, wodurch kryogenes Fluid austreten könnte.

Erstreckt sich beispielsweise die Ummantelung über den Bereich, in dem das erste Materialstück mit der ersten Verrohrung verbunden ist, werden im Vergleich zum Stand der Technik die Spannungen zwischen dem ersten Materialstück und der ersten Verrohrung reduziert und so die Verbindung geschont.

Bevorzugt weist die Ummantelung Metall und/oder Kunststoff und/oder Keramik und/oder Beton auf. Die Ummantelung kann in verschiedenen Ausführungsformen ausgeführt sein. In einer Ausführungsform könnte die Ummantelung in Form eines Rohres, insbesondere in Form eines Thermoschutzrohrs, bereitgestellt werden. Das Rohr umgibt das Übergangsbauteil und/oder die damit verbundene Verrohrung, wobei das Rohr stoffschlüssig (z.B. mittels Verschweißen) oder formschlüssig (mittels Schrauben) an dem Übergangsbauteil und/oder der damit verbundenen Verrohrung befestigt sein kann.

In einer alternativen Ausführungsform kann die Ummantelung in Form von Kunststoffmatten ausgebildet sein, wobei die Kunststoffmatten um das Übergangsbauteil und/oder die damit verbundene Verrohrung gelegt werden. Als Befestigung dienen hier beispielsweise Manschetten.

In einer weiteren Alternative kann die Ummantelung in Form einer Struktur mit Hohlräumen aus Kunststoff ausgebildet sein, wobei die Struktur beispielsweise hexagonale, rechteckige oder runde Hohlräume aufweist, die mit Gasen gefüllt sind oder Vakuum aufweisen.

Ferner können auch Isolierschaum und/oder Styropor als Ummantelung verwendet werden.

Bevorzugt ist die Isolierungsschicht, die an der Innenseite des Übergangsbauteils angeordnet ist, eine Ausmauerung. Die Ausmauerung ist als Hohlkörper ausgebildet und ist torus-, ring- oder kreiszylinderförmig. Ferner ist die Ausmauerung formschlüssig, beispielsweise mittels Schrauben, und/oder stoffschlüssig, beispielsweise verklebt, mit dem Übergangsbauteil verbunden, so dass durch das Übergangsbauteil fließendes kryogenes Fluid nicht in der Lage ist, die Ausmauerung zu verschieben oder zu entfernen. Ferner ist die Ausmauerung derart mit dem Übergangsbauteil verbunden, dass kein kryogenes Fluid zwischen die Ausmauerung und das Übergangsbauteil gelangen kann. Dies könnte beispielsweise die Verbindung zwischen der Ausmauerung und dem Übergangsbauteil lockern bzw. lösen. Ferner würde ein kryogenes Fluid zwischen dem Übergangsbauteil und der Ausmauerung der Isolierung des Übergangsbauteils entgegenwirken.

Bevorzugt weist die Ausmauerung eine Aluminiumoxid-Keramik, Beton, eine Struktur mit Hohlräumen aus Kunststoff, Isolierschaum und/oder Styropor oder eine Mischung dieser auf. Beton oder Isolierschaum können beispielsweise in die Form einer Ausmauerung gebracht bzw. gegossen werden. Eine Aluminiumoxid-Keramik kann beispielsweise derart hergestellt werden, dass es die Form der Ausmauerung aufweist. Es versteht sich, dass je nach Anwendung ein Material für die Ausmauerung von einem Fachmann bevorzugt werden kann.

Weiterhin ist beim erfindungsgemäßen Übergangsbauteil das erste Material Stahl oder rostfreier Stahl und das zweite Material Aluminium oder eine Aluminiumlegierung. Insbesondere in kryogenen Anlagen, beispielsweise kryogenen Wärmetauschern zur Verflüssigung von Gasen, oder kryogenen Behältern oder Kryopumpen, werden häufig Stahlrohre und Aluminiumrohre verwendet. Aluminium und Stahl (bzw. deren Legierungen) lassen sich nicht verschweißen. Das Übergangsbauteil ist somit geeignet, einen Übergang zwischen einem Stahlrohr und einem Aluminiumrohr zu schaffen, wobei die Verbindung fluiddicht ausgebildet ist.

Bevorzugt ist die mindestens eine Zwischenmaterialschicht eine Silberschicht, eine Nickelschicht oder eine Nickel-Titan-Schicht. Diese Materialien lassen sich mittels Sprengplattieren mit dem ersten Materialstück und/oder dem zweiten Materialstück verbinden, wodurch es möglich ist, das erste Materialstück mit dem zweiten Materialstück zu verbinden. Eine derart geschaffene Verbindung ist fluiddicht, so dass beispielsweise kein kryogenes Fluid austreten kann. Ferner ist die Verbindung zwischen dem ersten Materialstück und dem zweiten Materialstück unlösbar. Es versteht sich, dass die Anzahl sowie das verwendete Material entsprechend der Anwendung des Übergangsbauteils gewählt und variiert werden kann. Werden mehrere Zwischenmaterialschichten gewählt, können beispielsweise als Zwischenmaterialschichten eine oder mehrere Silberschichten, Nickelschichten und/oder Nickel-Titan-Schichten verwendet werden.

Der erfindungsgemäße Core-in-Shell-Wärmetauscher weist einen in einem Außenbehälter des Core-in-Shell-Wärmetauschers angeordneten Plattenwärmetauscher auf. Der Plattenwärmetauscher ist mit einer Zuleitung, über die Fluid in den Plattenwärmetauscher einleitbar ist, und mit einer Ableitung, über die Fluid aus dem Plattenwärmetauscher entnehmbar ist, versehen. Ferner ist mindestens ein erfindungsgemäßes Übergangsbauteil in der Zuleitung und/oder in der Ableitung des Plattenwärmetauschers angeordnet.

In einem Core-in-Shell-Wärmetauscher (auch als Block-in-Shell-, Block-in-Kettle- oder Platten- und Shell-Wärmetauscher bezeichnet; die Begriffe sind gleichbedeutend) ist mindestens ein Plattenwärmetauscher, der sogenannte "Core", in einem Außenbehälter, auch "Shell" genannt, angeordnet.

Der Core-in-Shell-Wärmetauscher dient dazu, eine indirekte Wärmeübertragung von beispielsweise einem gasförmigen Fluid auf ein flüssiges Fluid zu realisieren. Das gasförmige Fluid wird dabei beispielsweise von außen über die erste Zuleitung in den Plattenwärmetauscher eingeleitet, während das flüssige Fluid derart im Außenbehälter bereitgestellt wird, dass das flüssige Fluid den Plattenwärmetauscher umgibt. An den Platten des Plattenwärmetauschers findet der indirekte Wärmekontakt statt, wobei das gasförmige Fluid abgekühlt und verflüssigt und das flüssige Fluid zumindest teilweise in den gasförmigen Aggregatszustand überführt wird. Core-in-Shell-Wärmetauscher eignen sich jedoch auch für andere Arten der Wärmeübertragung.

Die Verwendung eines Core-in-Shell-Wärmetauschers ist gegenüber Rohrbündelwärmetauschern beispielsweise aufgrund der besser einander annäherbaren Kurven im Q-T-Diagramm, der geringeren Größe und des geringeren Gewichts sowie der geringeren Erstellungs- und Betriebskosten vorteilhaft. Ein Core-in-Shell-Wärmetauscher ist beispielsweise bei K. Thulukkanam, Heat Exchanger Design Handbook, 2. Auflage, CRC Press 2013 auf Seite 127 beschrieben und in Figur 4.25 dargestellt. Core-in-Shell-Wärmetauscher sind beispielsweise in der EP 3 237 825 A1, der WO 2016/102046 A1, der WO 2016/102045 A1, der WO 2016/000812 A1, der EP 3 143 352 A1, der EP 3 077 750 A1, der DE 10 2012 011328 A1 und der DE 10 2011 013 340 A1 offenbart.

Der Plattenwärmetauscher ist zumindest teilweise aus dem erwähnten zweiten Material gebildet, das sich nicht mit einem typischerweise für den überwiegenden Anteil der Rohrleitung verwendeten ersten Material verschweißen lässt. Die Zuleitung und/oder die Ableitung weist daher vorteilhafterweise eine erste Verrohrung aus dem ersten Material und eine zweite Verrohrung aus dem zweiten Material auf, wobei das erste Material und das zweite Material nicht durch Schmelzschweißen verbindbar sind, Die zweite Verohrung ist einerseits mit dem Plattenwärmetauscher und andererseits mit dem erfindungsgemäßen Übergangsbauteil verbunden, wobei das Übergangsbauteil dazu dient, die erste Verrohrung mit der zweiten Verrohrung zu verbinden.

Da die zweite Verrohrung und der Plattenwärmetauscher aus dem selben Material gebildet sind, können diese beispielsweise durch Verschweißen miteinander verbunden werden. Diese Verbindung ist fluiddicht und sorgt dafür, dass das Fluid, das in den Plattenwärmetauscher geleitet werden soll, in den Plattenwärmetauscher gelangt, und nicht vorher in den Außenbehälter des Core-in-Shell-Wärmetauschers strömt. Ferner stellt auch das Übergangsbauteil sicher, dass die Verbindung zwischen erster Verrohrung und zweiter Verrohrung fluiddicht ist.

Auch hier ist das erste Material Stahl oder rostfreier Stahl und das zweite Material Aluminium oder eine Aluminiumlegierung. Der Plattenwärmetauscher ist somit insbesondere aus Aluminium gebildet. Dies ist von Vorteil, da Aluminium eine hohe Wärmeleitfähigkeit aufweist und so die Wärme zwischen den beiden Fluiden gut leiten kann. Ferner kann der Plattenwärmetauscher beispielsweise durch Hartlöten leicht hergestellt werden.

Die erfindungsgemäße Coldbox weist eine Verrohrung auf, die mindestens ein erfindungsgemäßes Übergangsbauteil enthält.

Bei Coldboxen handelt es sich um temperaturisolierende Einhausungen, in denen bei tiefen, insbesondere kryogenen Temperaturen betriebene verfahrenstechnische Apparate installiert sind. Eine verfahrenstechnische Anlage kann eine oder mehrere entsprechende Coldboxen umfassen und insbesondere modular aus entsprechenden Coldboxen erstellt werden. Verfahrenstechnische Anlagen, die mit Coldboxen ausgestattet sind, sind beispielsweise Anlagen zur Luftzerlegung oder Anlagen zur Zerlegung von Synthesegas in seine Bestandteile Wasserstoff, Stickstoff und Kohlenmonoxid. In solchen Prozessen werden Temperaturen von -180 °C und weniger erreicht. Die Erfindung eignet sich für sämtliche Einsatzgebiete von Coldboxen und ist nicht auf diese Beispiele beschränkt. In einer Coldbox können auch mehrere Anlagenteile, also beispielsweise Trennapparate wie Kolonnen und die zugehörigen Wärmetauscher, zusammen mit der Verrohrung an einem tragenden Stahlrahmen befestigt werden, welcher außen mit Blechplatten verkleidet wird. Das Innere der auf diese Weise gebildeten Einhausung wird mit Isoliermaterial wie beispielsweise Perlit gefüllt, um einen Wärmeeintrag aus der Umgebung zu verhindern. Auch eine teilweise oder vollständige Vorfertigung von Coldboxen mit den entsprechenden Apparaten im Werk ist möglich, so dass diese auf der Baustelle bei Bedarf endgefertigt bzw. nur noch miteinander verbunden werden müssen. Zur Verbindung können temperaturisolierte und ggf. in Coldboxen untergebrachte Leitungsmodule verwendet werden. In typischen Coldboxen werden die Anlagenteile meist mit einem Mindestabstand zur Wand verbaut, um eine ausreichende Isolierung sicherzustellen.

Die Verrohrung in einer erfindungsgemäßen Coldbox wird vorzugsweise ohne Flanschverbindungen, d.h. vollständig verschweißt bzw. über mindestens ein erfindungsgemäßes Übergangsbauteil, ausgeführt, um die Entstehung von Undichtigkeiten zu vermeiden. Aufgrund der auftretenden Temperaturunterschiede können in der Verrohrung Dehnungsbögen vorhanden sein. Wartungsanfällige Bauteile werden typischerweise nicht in der Coldbox angeordnet, so dass das Innere der Coldbox vorteilhafterweise wartungsfrei ist. Ventile können beispielsweise als sogenannte Eckventile ausgeführt sein, um eine Reparatur von außerhalb zu ermöglichen. Dabei sitzt das Ventil in der Coldboxwand; die Rohrleitung wird zum Ventil und wieder zurückgeführt. Rohrleitungen und Apparate werden normalerweise in Aluminium ausgeführt, bei sehr hohen Betriebsdrücken kommt auch Edelstahl zum Einsatz. Das erfindungsgemäße Übergangsbauteil macht eine Verbindung dieser Materialien möglich. Der Anstrich der Coldbox wird sehr häufig in weiß, aber auch in anderen hellen Farben ausgeführt. Ein Eindringen von Feuchtigkeit aus der Umgebungsluft, die an den kalten Anlagenteilen gefrieren würde, kann durch eine kontinuierliche Spülung der Coldbox mit z.B. Stickstoff verhindert werden.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen beschrieben.

### Figurenbeschreibung

Figur 1 zeigt schematisch eine bevorzugte Ausführungsform eines erfindungsgemäßen Übergangsbauteils mit einer Ummantelung in einer Längsschnittansicht.
Figur 2 zeigt schematisch eine bevorzugte Ausführungsform eines erfindungsgemäßen Übergangsbauteils mit einer Ausmauerung in einer Längsschnittansicht.
Figur 3 zeigt schematisch eine bevorzugte Ausführungsform eines Core-in-Shell-Wärmetauschers.
Figure 4 zeigt schematisch eine bevorzugte Ausführungsform einer Coldbox.

Identische Bezugszeichen in den Figuren bezeichnen gleiche oder baugleiche Elemente und werden nicht jedes Mal gesondert erläutert.

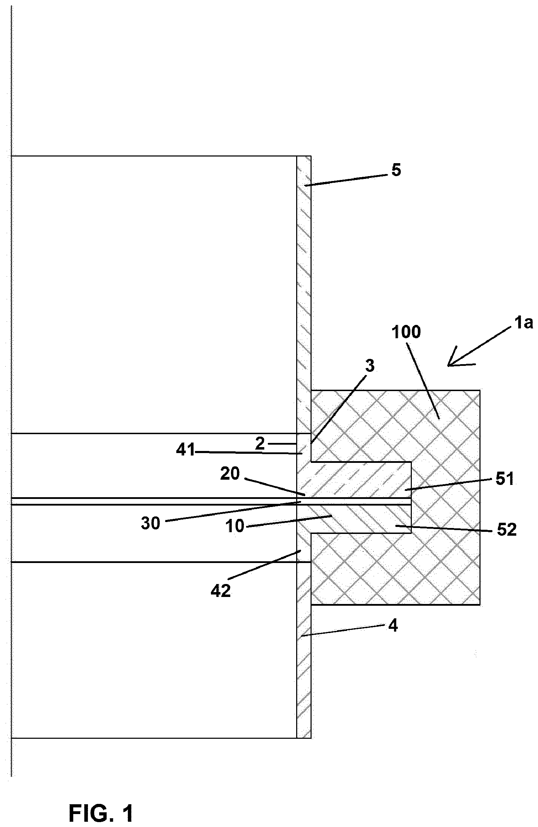

In Figur 1 ist eine bevorzugte Ausführungsform eines erfindungsgemäßen Übergangsbauteils mit einer Ummantelung in einer Längsschnittansicht gezeigt und mit 1a bezeichnet.

Das Übergangsbauteil 1a weist ein erstes Materialstück 10, ein zweites Materialstück 20 und eine Zwischenmaterialschicht 30 auf. Das Übergangsbauteil 1a bzw. das erste Materialstück 10, die Zwischenmaterialschicht 30 und das zweite Materialstück 20 weisen eine Hohlzylinderform mit einer radial innenliegenden Innenseite 2 und einer radial außenliegenden Außenseite 3 auf. Das erste Materialstück 10 besteht aus Stahl, die Zwischenmaterialschicht 30 aus Nickel, und das zweite Materialstück 20 aus Aluminium, wobei das erste Materialstück 10 nicht mittels Schmelzschweißen mit dem zweiten Materialstück 20 verbunden werden kann. Das erste Materialstück 10 ist mit einem Stahlrohr 4 und das zweite Materialstück 20 mit einem Aluminiumrohr 5 verbunden, insbesondere verschweißt.

Das erste Materialstück 10 und das zweite Materialstück 20 weisen jeweils einen dünnen Abschnitt 41, 42 und einen dicken Abschnitt 51,52 auf, wobei der dicke Abschnitt 51, 52 eine Dicke aufweist, die etwa zwei bis fünf mal dicker ist als eine Dicke des dünnen Abschnitts 41, 42.

Zwischen dem dicken Abschnitt 51 des ersten Materialstücks 10 und dem dicken Abschnitt 52 des zweiten Materialstücks 20 ist die Zwischenmaterialschicht 30 angeordnet. Die Zwischenmaterialschicht 30 wurde mittels Sprengplattieren mit dem zweiten Materialstück 20 verbunden. Anschließend wurde die Zwischenmaterialschicht 30 mit dem ersten Materialstück 10 verbunden. Diese Verbindung wurde hier mittels Sprengplattieren ausgebildet. Die dicken Abschnitte 51, 52 dienen hier insbesondere dazu, eine ausreichende Oberfläche zu bieten, auf die die Zwischenmaterialschicht 30 aufgebracht werden kann. Die Zwischenmaterialschicht 30 dient hier somit dazu, das erste Materialstück 10 mit dem zweiten Materialstück 20 zu verbinden. Eine derart geschaffene Verbindung ist fluiddicht, so dass beispielsweise kein kryogenes Fluid austreten kann. Ferner ist die Verbindung zwischen dem ersten Materialstück 10 und dem zweiten Materialstück 20 unlösbar.

Jedoch wird die Zwischenmaterialschicht 30 durch das Sprengplattieren physisch sehr beansprucht, wodurch die Zwischenmaterialschicht 30 spröde oder brüchig werden kann.

Insbesondere bei kryogenen Anlagen, bei denen das Übergangsbauteil 1a von kryogenem Fluid durchströmt wird, kühlt das kryogene Fluid das beanspruchte Übergangsbauteil 1a von der Innenseite 2 zur Außenseite 3 ab. Die Zwischenmaterialschicht 30 wird somit ebenfalls abgekühlt und zieht sich durch die Abkühlung zusammen. Diese zusätzlichen Kräfte können dazu führen, dass die spröde Zwischenmaterialschicht beschädigt oder zerstört wird, wodurch das Übergangsbauteil 1a undicht wird. Je größer der Temperaturunterschied zwischen der Innenseite 2 und der Außenseite 3 des Übergangsbauteils 1a ist, desto größer sind die Kräfte die auf die Zwischenmaterialschicht wirken.

Um den Temperaturunterschied zwischen der Innenseite 2 und der Außenseite 3 des Übergangsbauteils 1a zu reduzieren, weist das Übergangsbauteil 1a ferner eine Isolierung in Form einer Ummantelung 100, insbesondere ein Thermoschutzrohr auf. Die Ummantelung 100 ist als Hohlkörper ausgebildet und ist torus-, ring- oder kreiszylinderförmig. Die Ummantelung 100 ist auf der radial außenliegenden Außenseite 3 derart angeordnet, dass sie das Übergangsbauteil 1a umschließt. Durch eine derartige Anordnung weisen das erste Materialstück 10, die Zwischenmaterialschicht 30 und das zweite Materialstück 20 in etwa die gleiche Temperatur auf. Somit wird der Temperaturunterschied zwischen der Innenseite 2 und der Außenseite 3 der Zwischenmaterialschicht 30 reduziert, wodurch die auftretenden Spannungen in der Zwischenmaterialschicht 30 reduziert werden.

Ferner werden beispielsweise zwischen dem ersten Materialstück 10 und der Zwischenmaterialschicht 30 auftretende Spannungen, die beispielsweise das erste Materialstück 10 und/oder die Zwischenmaterialschicht 30 beschädigen oder zerstören können, reduziert. Die Ummantelung 100 erhöht somit die Lebensdauer des Übergangsbauteils 1a.

Ferner erstreckt sich die Ummantelung 100 zumindest zum Teil über das Stahlrohr 4 und das Aluminiumrohr 5. Dies ist von Vorteil, da ein Temperaturunterschied zwischen dem ersten Materialstück 10 und dem Stahlrohr 4 dazu führen könnte, dass Spannungen zwischen dem ersten Materialstück 10 und dem Stahlrohr 4 auftreten. Dies könnte beispielsweise dazu führen, dass die Schweißnaht zwischen dem ersten Materialstück 10 und dem Stahlrohr 4 beschädigt werden könnte.

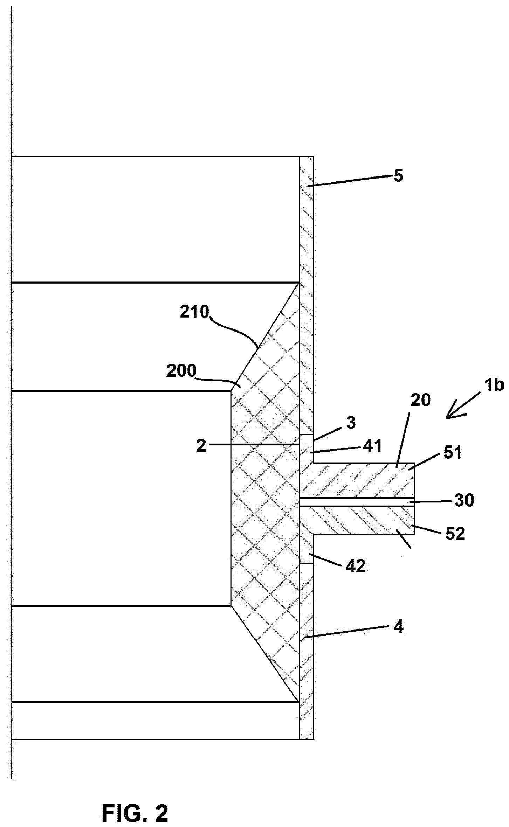

In Figur 2 ist eine weitere bevorzugte Ausführungsform eines erfindungsgemäßen Übergangsbauteils 1b mit einer Ausmauerung in einer Längsschnittansicht gezeigt.

Das Übergangsbauteil 1b unterscheidet sich von dem Übergangsbauteil 1a aus Figur 1 dadurch, dass das Übergangsbauteil 1b eine Isolierung in Form einer Ausmauerung 200 aufweist. Die Ausmauerung 200 ist als Hohlkörper ausgebildet und ist torus-, ringoder kreiszylinderförmig und ist beispielsweise eine Aluminiumoxid-Keramik.

Die Ausmauerung 200 ist auf der radial innenliegenden Innenseite 3 derart angeordnet, dass sie das Übergangsbauteil 1b bedeckt. Durch eine derartige Anordnung weisen das erste Materialstück 10, die Zwischenmaterialschicht 30 und das zweite Materialstück 20 in etwa die gleiche Temperatur auf. Somit wird der Temperaturunterschied zwischen der Innenseite 2 und der Außenseite 3 der Zwischenmaterialschicht 30 reduziert, wodurch die auftretenden Spannungen in der Zwischenmaterialschicht 30 reduziert werden.

Ferner werden beispielsweise zwischen dem ersten Materialstück 10 und der Zwischenmaterialschicht 30 auftretende Spannungen, die beispielsweise das erste Materialstück 10 und/oder die Zwischenmaterialschicht 30 beschädigen oder zerstören können, reduziert. Die Ausmauerung 200 erhöht somit die Lebensdauer des Übergangsbauteils 1b.

Ferner erstreckt sich die Ausmauerung 200 zumindest zum Teil über das Stahlrohr 4 und das Aluminiumrohr 5. Dies ist von Vorteil, da ein Temperaturunterschied zwischen dem ersten Materialstück 10 und dem Stahlrohr 4 dazu führen könnte, dass Spannungen zwischen dem ersten Materialstück 10 und dem Stahlrohr 4 auftreten. Dies könnte beispielsweise dazu führen, dass die Schweißnaht zwischen dem ersten Materialstück 10 und dem Stahlrohr 4 beschädigt werden könnte.

Die Ausmauerung 200 weist einen trapezförmigen Querschnitt auf, wobei die radial von innen nach außen verlaufenden Kanten 210 der Ausmauerung 200 geneigt bzw. abgeflacht ausgebildet sind. Dadurch kann das kryogene Fluid durch das Übergangsbauteil 1b fließen, ohne dass die Ummauerung 200 den Durchflusswiderstand deutlich erhöht, wie es beispielsweise bei senkrecht verlaufenden Kanten der Fall wäre.

Die Ausmauerung 200 ist hier formschlüssig mit dem Übergangsbauteil verbunden, insbesondere mit diesem verschraubt, so dass durch das Übergangsbauteil 1b fließendes kryogenes Fluid nicht in der Lage ist, die Ausmauerung 200 zu verschieben oder zu entfernen. Ferner ist die Ausmauerung 200 derart mit dem Übergangsbauteil 1b verbunden, dass kein kryogenes Fluid zwischen die Ausmauerung 200 und das Übergangsbauteil 1b gelangen kann. Dies könnte beispielsweise die Verbindung zwischen der Ausmauerung 200 und dem Übergangsbauteil 1b lockern bzw. lösen. Ferner würde ein kryogenes Fluid zwischen dem Übergangsbauteil 1b und der Ausmauerung 200 der Isolierung des Übergangsbauteils 1b entgegenwirken.

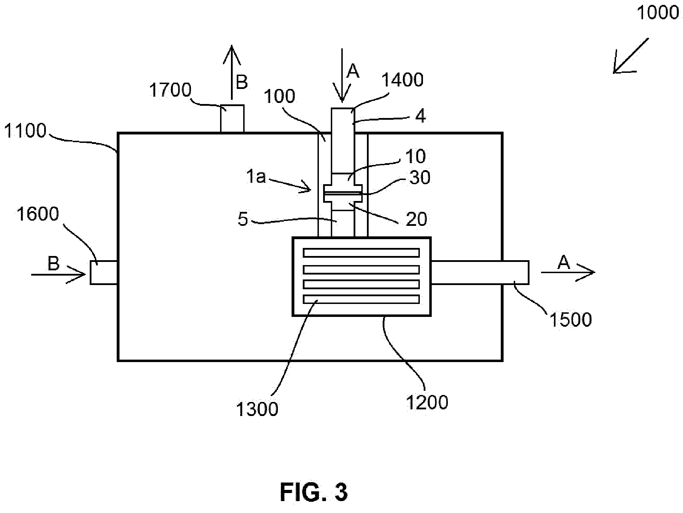

In Figur 3 ist schematisch eine bevorzugte Ausführungsform eines Core-in-Shell-Wärmetauschers 1000 gezeigt. Der Core-in-Shell-Wärmetauscher 1000 weist einen Außenbehälter 1100 (shell) und einen in dem Außenbehälter 1100 angeordneten Plattenwärmetauscher 1200 auf.

Der Plattenwärmetauscher 1200 weist eine Vielzahl von Platten 1300 auf. Der Plattenwärmetauscher 1200 sowie die Platten 1300 sind beispielsweise aus Aluminium hartgelötet.

Die Platten 1300 sind dazu eingerichtet, eine Wärme von einem Fluid A, beispielsweise Erdgas, auf ein Fluid B, beispielsweise ein Kältemittel (zum Beispiel ein Gemisch aus Ethylen und Propylen), zu übertragen. Dazu kann Fluid A, das in gasförmigem Zustand vorliegt, über eine erste Zuleitung 1400 von außen in den Core-in-Shell-Wärmetauscher 1000 bzw. in den Plattenwärmetauscher 1200 geführt werden, d.h. das Fluid A fließt durch die Platten 1300 des Plattenwärmetauschers. Das Fluid A wird dort abgekühlt, und kann als Flüssigkeit über eine erste Ableitung 1500, die Aluminium aufweist, aus dem Plattenwärmetauscher 1200 sowie aus dem Core-in-Shell-Wärmetauscher 1000 abgeführt bzw. entnommen werden.

Die Wärme von Fluid A wird dabei an den Platten1300 auf das Fluid B übertragen, das als Flüssigkeit und/oder als Gas (hier ein zwei-Phasen-Gemisch), über eine zweite Zuleitung 1600 in den Außenbehälter 1100 des Core-in-Shell-Wärmetauschers 1000 geleitet wird. Das Fluid B strömt zwischen die Platten 1300 des Plattenwärmetauschers 1200 und die flüssigen Bestandteile des Fluids B werden in den gasförmigen Zustand überführt. Die gasförmigen Bestandteile des Fluids B werden auf eine höhere Temperatur gebracht. Anschließend kann das gasförmige Fluid B aus dem Core-in-Shell-Wärmetauscher 1000 über eine zweite Ableitung 1700 entnommen werden. Die zweite Zuleitung 1600 sowie die zweite Ableitung 1700 weisen beispielsweise Stahl auf.

Die erste Zuleitung 1400 weist hier ein Stahlrohr 4 und ein Aluminiumrohr 5 auf, wobei das Aluminiumrohr 5 vollständig und das Stahlrohr 4 zum Teil im Inneren des Außenbehälters 1100 angeordnet ist. Das Aluminiumrohr 5 ist mit dem Plattenwärmetauscher 1200 verschweißt. Das Stahlrohr 4 dient beispielsweise dazu, mit einem Stahlrohr eines Tanks, in dem Fluid A vorliegt, verbunden, insbesondere verschweißt, zu werden.

Ferner ist zwischen dem Stahlrohr 4 und dem Aluminiumrohr 5 das Übergangsbauteil 1a (aus Fig. 1) angeordnet. Das Übergangsbauteil 1a dient dazu, das Stahlrohr 4 fluiddicht mit dem Aluminiumrohr 5 zu verbinden. Dazu weist das Übergangsbauteil 1a ein erstes Materialstück 10, das Stahl aufweist, ein zweites Materialstück 20, das Aluminium aufweist, und eine Zwischenmaterialschicht 30, die Nickel aufweist und die zwischen dem ersten Materialstück 10 und dem zweiten Materialstück 20 mittels Sprengplattieren angeordnet ist, auf. Das erste Materialstück 10 ist mit dem Stahlrohr 4, und das zweite Materialstück 20 mit dem Aluminiumrohr 5 verschweißt.

Im Inneren der ersten Zuleitung 1400, durch die das gasförmige Fluid A in den Plattenwärmetauscher 1200 geleitet wird, ist die Temperatur höher als die Temperatur außerhalb der ersten Zuleitung 1400. Auf Grund dieses Temperaturunterschieds sowie der unterschiedlichen Wärmeausdehnungskoeffizienten der einzelnen Materialien können in dem Übergangsbauteil 1a und/oder in der ersten Zuleitung 1400 Spannungen zwischen der Innenseite und der Außenseite und/oder zwischen den einzelnen Materialien, beispielsweise an den Schweißnähten, auftreten. Dies könnte beispielsweise zu Rissen oder Brüchen in der ersten Zuleitung 1400 oder in den einzelnen Materialien führen.

Die Ummantelung 100 des Übergangsbauteils 1a erstreckt sich in dieser Ausführungsform über den im Inneren des Außenbehälters 1100 angeordneten Teil der ersten Zuleitung 1400 und sorgt somit dafür, dass das Auftreten von Spannungen reduziert wird. Ferner wird somit verhindert, dass das gasförmige Fluid A durch Risse und Brüche, beispielsweise an einer Schweißnaht, austreten könnte.

Es versteht sich, dass die Verwendung des Übergangsbauteils 1a in der ersten Zuleitung 1400 hier nur ein Beispiel ist. Es ist ferner möglich, zusätzliche Übergangsbauteile in bzw. an dem Core-in-Shell-Wärmetauscher 1000 zu verbauen. Sofern beispielsweise die zweite Ableitung 1700, die Stahl aufweist, außerhalb des Core-in-Shell-Wärmetauschers 1000 mit einem Rohr verbunden werden soll, das nicht Stahl aufweist und somit nicht direkt mit der zweiten Ableitung 1700 verschweißt werden kann, könnte hier ein entsprechendes Übergangsbauteil eingesetzt werden.

Ferner könnte es in einem Fall notwendig sein, dass die erste Ableitung 1500 Stahl aufweisen muss, wodurch eine direkte Verbindung der ersten Ableitung 1500 mit dem Plattenwärmetauscher 1200 nicht realisiert werden könnte. Somit wäre hier der Einsatz eines weiteren Übergangsbauteils denkbar.

Auch ist der Core-in-Shell-Wärmetauscher 1000 nur ein Beispiel für die Anwendung des Übergangsbauteils. Es ist ferner auch zweckmäßig, Übergangsbauteile in ColdBox-Anlagen oder kurz Coldboxen zu verwenden. Cold-Box-Anlagen werden zur Luftzerlegung oder zur Zerlegung von Synthesegas verwendet und weisen dazu eine Vielzahl von Wärmetauschern und/oder Kältekammern als verfahrenstechnische Apparate auf, durch die die Luft oder das Synthesegas strömt. Übergangsbauteile können beispielsweise an Verrohrungen angebracht werden, die dazu dienen, einen bestimmten Bestandteil der Luft oder des Synthesegases nach der Zertrennung aus der Cold-Box-Anlage zu entnehmen. Da die einzelnen Bestandteile beispielsweise in Stahl- oder Edelstahlbehälter abgefüllt und gelagert werden, jedoch die Wärmetauscher beispielsweise Aluminium aufweisen, wird hier die Verwendung von Übergangsbauteilen bevorzugt, da dadurch eine einfache Verbindung der Aluminiumverrohrung des Wärmetauschers mit der Verrohrung des Edelstahlbehälters geschaffen werden kann.

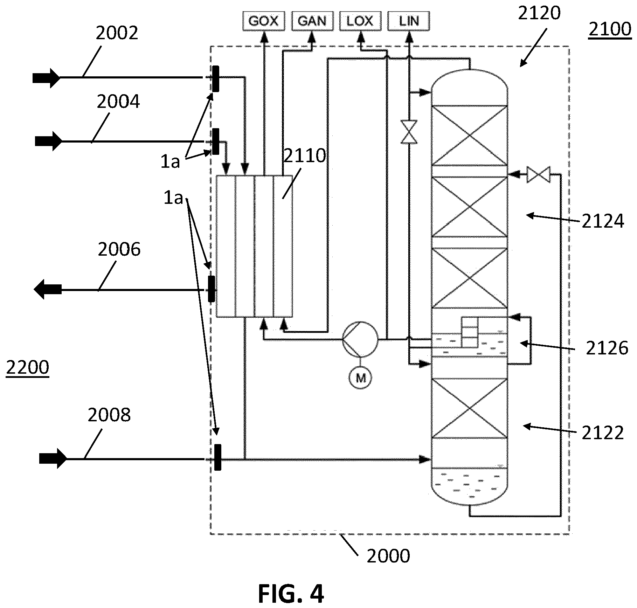

Figur 4 stellt beispielhaft eine Luftzerlegungsanlage 2100 an sich bekannter Art dar, deren Komponenten zumindest teilweise in einer Coldbox 2000 angeordnet sind.

Luftzerlegungsanlagen der gezeigten Art sind vielfach an anderer Stelle beschrieben, beispielsweise bei H.-W. Häring (Hrsg.), Industrial Gases Processing, Wiley-VCH, 2006, inbesondere Abschnitt 2.2.5, "Cryogenic Rectification". Für detaillierte Erläuterungen zu Aufbau und Funktionsweise sei daher auf entsprechende Fachliteratur verwiesen. Eine Luftzerlegungsanlage zum Einsatz der vorliegenden Erfindung kann auf unterschiedlichste Weise ausgebildet sein.

Die in Figur 4 beispielhaft gezeigte Luftzerlegungsanlage 2100 kann in einem links der Coldbox 2000 schematisch angedeuteten und nicht detailliert veranschaulichten sogenannten warmen Teil 2200 unter anderem einen Hauptluftverdichter, eine Vorkühleinrichtung, ein Reinigungssystem und eine Nachverdichteranordnung aufweisen. Innerhalb der Coldbox 2000 sind als verfahrenstechnische Apparate ein Hauptwärmetauscher 2110 und ein Destillationssäulensystem 2120 angeordnet. Das Destillationssäulensystem 2120 umfasst im dargestellten Beispiel eine klassische Doppelsäulenanordnung aus einer Hochdrucksäule 2122 und einer Niederdrucksäule 2124, die über einen Hauptkondensator 2126 wärmetauschend miteinander verbunden sind.

Der Coldbox 2000 werden druckbeaufschlagte Einsatzluftströme in Pfeilrichtung und über Leitungen 2002, 2004, die mittels Übergangsstücken 1a an die Coldbox 2000 angebunden sind, zugeführt. Einer der Einsatzluftströme kann nach Teilabkühlung in dem Hauptwärmetauscher 2110 über eine Leitung 2006, die über ein Übergangsstück 1a an die Coldbox 2000 angebunden ist, entnommen, beispielsweise außerhalb der Coldbox 2000 entspannt, und über eine Leitung 2008, die über ein Übergangsstück 1a an die Coldbox 2000 angebunden ist, der Coldbox 2000 wieder zugeführt werden.

Die Übergangsbauteile 1a verbinden die Außenverrohrung der Coldbox 2000 mit einer Aluminiumverrohrung innerhalb der Coldbox 2000.

In der Hochdrucksäule 2122 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdrucksäule 2122 abgezogen und in die Niederdrucksäule 2124 überführt. Vom Kopf der Hochdrucksäule 2122 wird ein gasförmiges stickstoffreiches Kopfprodukt abgezogen, im Hauptkondensator 2126 verflüssigt und in Anteilen als Rücklauf auf die Hochdrucksäule 2122 aufgegeben, in die Niederdrucksäule 2124 entspannt und als Flüssigprodukt LIN aus der Luftzerlegungsanlage 2100 ausgeleitet.

In der Niederdrucksäule 2124 werden eine sauerstoffreiche flüssige Sumpffraktion sowie eine stickstoffreiche gasförmige Kopffraktion gebildet. Erstere wird teilweise in einer mit einem Motor M gekoppelten Pumpe flüssig auf Druck gebracht, in dem Hauptwärmetauscher 2110 erwärmt und als gasförmiges Druckprodukt GOX bereitgestellt. Ein nicht in der Pumpe flüssig auf Druck gebrachter Anteil kann als Flüssigsauerstoffprodukt LOX aus der Luftzerlegungsanlage 2100 ausgeleitet werden. Ein vom Kopf der Niederdrucksäule 2124 abgezogener gasförmiger stickstoffreicher Strom wird durch den Hauptwärmetauscher 2110 geführt und als Stickstoffprodukt GAN bereitgestellt.

Es versteht sich, dass die bevorzugten Ausführungsformen gemäß Figur 1 und 2 auch kombiniert werden können. Beispielsweise kann das Übergangsbauteil eine Ummantelung 100 sowie eine Ausmauerung 200 aufweisen. Dadurch kann der Temperaturunterschied zwischen der Innenseite 2 und der Außenseite 3 des Übergangsbauteils zusätzlich reduziert und die Lebensdauer des Übergangsbauteils verlängert werden. Auch könnte in der Anlage gemäß Figur 3 oder Figur 4 ein Übergangsbauteil 1b oder beide Übergangsbauteile oder hiervon verschiedene Übergangsbauteile wie gerade skizziert verwendet werden.

## Patentansprüche

1. Übergangsbauteil (1a, 1b) zur Verbindung von Bauteilen eines chemischen oder verfahrenstechnischen Apparats, wobei das Übergangsbauteil (1a, 1b) ein erstes Materialstück (10) aus einem ersten Material und ein zweites Materialstück (20) aus einem zweiten Material aufweist, wobei das erste Material und das zweite Material nicht durch Schmelzschweißen miteinander verbindbar sind, wobei das erste Materialstück (10) und das zweite Materialstück (20) einen Hohlkörper bilden, wobei das Übergangsbauteil (1a, 1b) eine radial innenliegende Innenseite (2) und eine radial außenliegende Außenseite (3) aufweist, wobei das erste Materialstück (10) über mindestens eine Zwischenmaterialschicht (30) mit dem zweiten Materialstück (20) verbunden ist, wobei
das Übergangsbauteil (1a, 1b) mindestens eine Isolierungsschicht (100, 200) aufweist, wobei die Isolierungsschicht (100, 200) sich zumindest zum Teil über die Innenseite (2) und/oder die Außenseite (3) des Übergangsbauteils (1a, 1b) erstreckt, **dadurch gekennzeichnet**
**dass** das erste Material Stahl oder rostfreier Stahl und das zweite Material Aluminium oder eine Aluminiumlegierung ist.

2. Übergangsbauteil (1a, 1b) nach Anspruch 1, **dadurch gekennzeichnet, dass** die mindestens eine Isolierungsschicht (100, 200) derart angeordnet ist, dass sie das erste Materialstück (10), die mindestens eine Zwischenmaterialschicht (30) und das zweite Materialstück (20) bedeckt.

3. Übergangsbauteil (1a, 1b) nach einem der vorstehenden Ansprüche, **dadurch gekennzeichnet, dass** die Isolierungsschicht (100, 200), die an der Außenseite (3) des Übergangsbauteils (1a, 1b) angeordnet ist, eine Ummantelung (100) ist.

4. Übergangsbauteil (1a, 1b) nach Anspruch 3, bei dem das erste Materialstück (10) mit einer ersten Verrohrung (4) aus dem ersten Material und das zweite Materialstück (20) mit einer zweiten Verrohrung (5) aus dem zweiten Material verbunden ist, **dadurch gekennzeichnet, dass** die Ummantelung (100) ferner einen Abschnitt der ersten Verrohrung (4) und/oder einen Abschnitt der zweiten Verrohrung (5) bedeckt.

5. Übergangsbauteil (1a, 1b) nach einem der Ansprüche 3 oder 4, **dadurch gekennzeichnet, dass** die Ummantelung (100) Metall und/oder Kunststoff und/oder Keramik und/oder Beton aufweist.

6. Übergangsbauteil (1a, 1b) nach einem der Ansprüche 1 oder 2, **dadurch gekennzeichnet, dass** die Isolierungsschicht (100, 200), die an der Innenseite (2) des Übergangsbauteils (1a, 1b) angeordnet ist, eine Ausmauerung (200) ist.

7. Übergangsbauteil (1a, 1b) nach Anspruch 6, **dadurch gekennzeichnet, dass** die Ausmauerung (200) eine Aluminiumoxid-Keramik, Beton, eine Wabenstruktur aus Kunststoff, Isolierschaum und/oder Styropor oder eine Mischung dieser aufweist.

8. Übergangsbauteil (1a, 1b) nach einem der vorstehenden Ansprüche, **dadurch gekennzeichnet, dass** die mindestens eine Zwischenmaterialschicht (30) eine metallische Schicht, insbesondere eine Silberschicht, eine Nickelschicht oder eine Nickel-Titan-Schicht ist.

9. Core-in-Shell-Wärmetauscher (1000) mit einem Plattenwärmetauscher (1200), der in einem Außenbehälter (1100) angeordnet ist, mit einer Zuleitung (1400), über die Fluid in den Plattenwärmetauscher (1200) einleitbar ist, und mit einer Ableitung (1500), über die Fluid aus dem Plattenwärmetauscher (1200) entnehmbar ist, **dadurch gekennzeichnet, dass** mindestens ein Übergangsbauteil (1a, 1b) gemäß einem der vorstehenden Ansprüche in der Zuleitung (1400) und/oder in der Ableitung (1500) angeordnet ist.

10. Core-in-Shell-Wärmetauscher (1000) nach Anspruch 9, wobei der Plattenwärmetauscher (1200) aus dem zweiten Material gebildet ist, wobei die Zuleitung (1400) und/oder die Ableitung (1500) eine erste Verrohrung (4) aus dem ersten Material und eine zweite Verrohrung (5) aus dem zweiten Material aufweist, wobei die zweite Verrohrung (5) mit dem Plattenwärmetauscher (1200) verbunden ist, **dadurch gekennzeichnet, dass** die erste Verrohrung (4) über das mindestens eine Übergangsbauteil (1a, 1b) mit der zweiten Verrohrung (5) verbunden ist.

11. Coldbox (2000), wobei die Coldbox (2000) mindestens einen verfahrenstechnischen Apparat (2110, 2120) aufweist, **dadurch gekennzeichnet, dass** die Verrohrung innerhalb des mindestens einen verfahrenstechnischen Apparats (2110, 2120) und/oder - bei mehreren verfahrenstechnischen Apparaten - zwischen mindestens zwei verfahrenstechnischen Apparaten (2110, 2120) und/oder die Zuleitung (2002, 2004) zu und/oder die Ableitung (2006, 2008) aus der Coldbox (2000) mindestens ein Übergangsbauteil (1a, 1b) gemäß einem der Ansprüche 1 bis 8 aufweist.

## Claims

1. Transition component (1a, 1b) for connecting components of a chemical or process engineering apparatus, the transition component (1a, 1b) having a first piece of material (10) made of a first material and a second piece of material (20) made of a second material, it not being possible for the first material and the second material to be connected to one another by fusion welding, the first piece of material (10) and the second piece of material (20) forming a hollow body, the transition component (1a, 1b) having a radially inner interior face (2) and a radially outer exterior face (3), the first piece of material (10) being connected to the second piece of material (20) via at least one intermediate material layer (30), the transition component (1a, 1b) having at least one insulation layer (100, 200), the insulation layer (100, 200) extending at least partially over the interior face (2) and/or the exterior face (3) of the transition component (1a, 1b), **characterized in that** the first material is steel or stainless steel and the second material is aluminum or an aluminum alloy.

2. Transition component (1a, 1b) according to claim 1,
**characterized in that** the at least one insulation layer (100, 200) is arranged to cover the first piece of material (10), the at least one intermediate material layer (30) and the second piece of material (20).

3. Transition component (1a, 1b) according to either of the preceding claims, **characterized in that** the insulation layer (100, 200), which is arranged on the exterior face (3) of the transition component (1a, 1b), is a casing (100).

4. Transition component (1a, 1b) according to claim 3, the first piece of material (10) being connected to a first piping (4) made of the first material and the second piece of material (20) being connected to a second piping (5) made of the second material, **characterized in that** the casing (100) further covers a portion of the first piping (4) and/or a portion of the second piping (5).

5. Transition component (1a, 1b) according to either claim 3 or claim 4,
**characterized in that** the casing (100) comprises metal and/or plastics material and/or ceramic and/or concrete.

6. Transition component (1a, 1b) according to one of claims 1 or 2,
**characterized in that** the insulation layer (100, 200), which is arranged on the interior face (2) of the transition component (1a, 1b), is a refractory lining (200).

7. Transition component (1a, 1b) according to claim 6,
**characterized in that** the refractory lining (200) has an aluminum oxide ceramic, concrete, a honeycomb structure made of plastics material, insulating foam and/or polystyrene, or a mixture thereof.

8. Transition component (1a, 1b) according to any of the preceding claims,
**characterized in that** the at least one intermediate material layer (30) is a metal layer, in particular a silver layer, a nickel layer or a nickel-titanium layer.

9. Core-in-shell heat exchanger (1000) comprising a plate heat exchanger (1200), which is arranged in an outer container (1100), comprising a supply line (1400) via which fluid can be introduced into the plate heat exchanger (1200), and comprising a discharge line (1500) via which fluid can be removed from the plate heat exchanger (1200), **characterized in that** at least one transition component (1a, 1b) according to any of the preceding claims is arranged in the supply line (1400) and/or in the discharge line (1500).

10. Core-in-shell heat exchanger (1000) according to claim 9, the plate heat exchanger (1200) being formed from the second material, the supply line (1400) and/or the discharge line (1500) having a first piping (4) made of the first material and a second piping (5) made of the second material, the second piping (5) being connected to the plate heat exchanger (1200), **characterized in that** the first piping (4) is connected to the second piping (5) via the at least one transition component (1a, 1b).

11. Cold box (2000), the cold box (2000) having at least one process engineering apparatus (2110, 2120), **characterized in that** the piping within the at least one process engineering apparatus (2110, 2120) and/or-in the case of a plurality of process engineering apparatuses-between at least two process engineering apparatuses (2110, 2120) and/or the supply line (2002, 2004) to and/or the discharge line (2006, 2008) from the cold box (2000) has at least one transition component (1a, 1b) according to any of claims 1 to 8.

## Revendications

1. Composant de transition (1a, 1b) destiné à relier des composants d'un appareil d'ingénierie chimique ou d'ingénierie des procédés, le composant de transition (1a, 1b) présentant une première pièce de matériau (10) constituée d'un premier matériau et une seconde pièce de matériau (20) constituée d'un second matériau, le premier matériau et le second matériau ne pouvant pas être reliés l'un à l'autre par soudage par fusion, la première pièce de matériau (10) et la seconde pièce de matériau (20) formant un corps creux, le composant de transition (1a, 1b) présentant un côté interne (2) radialement à l'intérieur et un côté externe (3) radialement à l'extérieur, la première pièce de matériau (10) étant reliée à la seconde pièce de matériau (20) par l'intermédiaire d'au moins une couche de matériau intermédiaire (30), le composant de transition (1a, 1b) présentant au moins une couche d'isolation (100, 200), la couche d'isolation (100, 200) s'étendant au moins en partie sur le côté interne (2) et/ou le côté externe (3) du composant de transition (1a, 1b), **caractérisé en ce que** le premier matériau est de l'acier ou de l'acier inoxydable et le second matériau est de l'aluminium ou un alliage d'aluminium.

2. Composant de transition (1a, 1b) selon la revendication 1,
**caractérisé en ce que** l'au moins une couche d'isolation (100, 200) est disposée de telle sorte qu'elle recouvre la première pièce de matériau (10), l'au moins une couche de matériau intermédiaire (30) et la seconde pièce de matériau (20).

3. Composant de transition (1a, 1b) selon l'une des revendications précédentes, **caractérisé en ce que** la couche d'isolation (100, 200) qui est disposée sur le côté externe (3) du composant de transition (1a, 1b) est une enveloppe (100).

4. Composant de transition (1a, 1b) selon la revendication 3, dans lequel la première pièce de matériau (10) est reliée à un premier système de tuyaux (4) constitué du premier matériau et la seconde pièce de matériau (20) est reliée à un second système de tuyaux (5) constitué du second matériau,
**caractérisé en ce que** l'enveloppe (100) recouvre en outre une section du premier système de tuyaux (4) et/ou une section du second système de tuyaux (5).

5. Composant de transition (1a, 1b) selon l'une des revendications 3 ou 4,
**caractérisé en ce que** l'enveloppe (100) présente un métal et/ou une matière synthétique et/ou une céramique et/ou du béton.

6. Composant de transition (1a, 1b) selon l'une des revendications 1 ou 2,
**caractérisé en ce que** la couche d'isolation (100, 200) qui est disposée sur le côté interne (2) du composant de transition (1a, 1b) est un garnissage (200).

7. Composant de transition (1a, 1b) selon la revendication 6,
**caractérisé en ce que** le garnissage (200) présente une céramique d'oxyde d'aluminium, du béton, une structure en nid d'abeille en matière synthétique, une mousse isolante et/ou du polystyrène expansé ou un mélange de ceux-ci.

8. Composant de transition (1a, 1b) selon l'une des revendications précédentes, **caractérisé en ce que** l'au moins une couche de matériau intermédiaire (30) est une couche métallique, en particulier une couche d'argent, une couche de nickel ou une couche de nickel et de titane.

9. Échangeur thermique à coeur dans coque (1000) comportant un échangeur thermique à plaques (1200) qui est disposé dans un contenant externe (1100), comportant une conduite d'alimentation (1400) par l'intermédiaire de laquelle du fluide peut être introduit dans l'échangeur thermique à plaques (1200), et comportant une conduite d'évacuation (1500) par l'intermédiaire de laquelle du fluide peut être retiré de l'échangeur thermique à plaques (1200), **caractérisé en ce qu'**au moins un composant de transition (1a, 1b) selon l'une des revendications précédentes est disposé dans la conduite d'alimentation (1400) et/ou dans la conduite d'évacuation (1500).

10. Échangeur thermique à coeur dans coque (1000) selon la revendication 9, l'échangeur thermique à plaques (1200) étant formé à partir du second matériau, la conduite d'alimentation (1400) et/ou la conduite d'évacuation (1500) présentant un premier système de tuyaux (4) constitué du premier matériau et un second système de tuyaux (5) constitué du second matériau, le second système de tuyaux (5) étant relié à l'échangeur thermique à plaques (1200),
**caractérisé en ce que** le premier système de tuyaux (4) est relié au second système de tuyaux (5) par l'intermédiaire de l'au moins un composant de transition (1a, 1b).

11. Boîte froide (2000), la boîte froide (2000) présentant au moins un appareil d'ingénierie des procédés (2110, 2120), **caractérisée en ce que** le système de tuyaux à l'intérieur de l'au moins un appareil d'ingénierie des procédés (2110, 2120) et/ou, dans le cas de plusieurs appareils d'ingénierie des procédés, entre au moins deux appareils d'ingénierie des procédés (2110, 2120) et/ou la conduite d'alimentation (2002, 2004) vers la boîte froide et/ou la conduite d'évacuation (2006, 2008) à partir de la boîte froide (2000) présente au moins un composant de transition (1a, 1b) selon l'une des revendications 1 à 8.
